# EUROPEAN PATENT APPLICATION

(11) **EP 3 530 955 A1**
(43) Date of publication of application: **28.08.2019**
(21) Application number: 17861219.8
(22) Date of filing: 13.10.2017
(51) Int. Cl.: F04D 29/28, B60H 1/00, F04D 29/44, F04D 29/70

(54) **CENTRIFUGAL BLOWER**

(30) Priority: 18.10.2016 JP 2016204521
(71) Applicant: Valeo Japan Co., Ltd., Saitama 360-0193 (JP)
(72) Inventor: NAGANO, Hideki, Kumagaya-shi Saitama 360-0193 (JP); ARAKI, Daisuke, Kumagaya-shi Saitama 360-0193 (JP)
(74) Representative: Metz, Gaëlle
(86) International application number: PCT/JP2017/037115
(87) International publication number: WO 2018/074339

(57) **Abstract**

[Problem]

To provide a single-suction centrifugal blower for a vehicle, which is equipped with a separation cylinder, capable of making use of a filter effectively by letting the air pass through the entire region of the filter irrespective of its suction mode.

[Solving Means]

A separation cylinder (14; 14B) or an air intake housing (21; 21A; 21B) is configured in such a way that, when a filter (35) is divided into two regions (two rectangular regions, for example) of a first region (35A) and a second region (35B) by a virtual division line (DL) that traverses the peripheral border of the filter, an opening region (240) surrounded by the peripheral border (241, 242, 243, 244) of an inlet side end part (24) of the separation cylinder (14; 14B) coincides with the first region (35A) when the filter is seen from the upstream side with respect to the airflow direction.

## Description

### Technical Field

The present invention relates to a centrifugal blower designed for a two-layer flow air conditioning system for a vehicle.

### Background Art

A two-layer flow air conditioning system for a vehicle is known in the field of air conditioning systems for a vehicle. This type of air conditioning system includes: two air blowing passages, i.e. a first air blowing passage and a second air blowing passage, that are separated from each other; and a single centrifugal blower that flows the air into these two air blowing passages. The centrifugal blower has: a scroll housing; and an air intake housing for taking in the air to be sent to the scroll housing.

The centrifugal blower has a separation cylinder that is inserted into a suction port of a scroll housing and a radially inside space of blade rows of an impeller (see PTLs 1 and 2, for example). A space between the radially outside of the blade rows of the impeller and the scroll housing is divided vertically by a separation wall, which forms a first airflow channel that communicates with the first air blowing passage and a second airflow channel that communicates with the second air blowing passage. The separation cylinder is installed in such a way that a first airflow which flows through a first passage located outside the separation cylinder flows through the first airflow channel after being introduced into an upper half part of the blade rows and a second airflow which flows through a second passage located inside the separation cylinder flows through the second airflow channel after being introduced into a lower half part of the blade rows.

The air intake housing has: an external air introduction port for taking in the air (external air) outside the vehicle compartment; and an internal air introduction port for taking in the air (internal air) inside the vehicle compartment. Typically, the external air introduction port and the internal air introduction port are arranged at positions opposed to each other with respect to the central axis of the scroll housing. In many cases, the external air introduction port is installed on the front side of the vehicle, and the internal air introduction port is installed on the rear side of the vehicle. In the centrifugal blower of PTL 2, a filter is installed between a region where the external air introduction port and the internal air introduction port are arranged and an inlet side end part of the separation cylinder.

When the air conditioning system operates in the external air mode, external air introduced into the air intake housing through the external air introduction port is divided into: an airflow to be introduced into the separation cylinder through a central part of the filter; and an airflow to flow into the outside of the separation cylinder through only a part of the filter ahead of the central part, and is then sucked into the scroll housing.

When the air conditioning system operates in the internal air mode, external air introduced into the air intake housing through the internal air introduction port is divided into: an airflow to be introduced into the separation cylinder through the central part of the filter; and an airflow to flow into the outside of the separation cylinder through only a part of the filter behind the central part, and is then sucked into the scroll housing.

When the air conditioning system operates in the internal/external air two-layer flow mode, internal air introduced into the air intake housing through the internal air introduction port is introduced into the separation cylinder through the central part of the filter, and external air introduced into the air intake housing through the external air introduction port flows into the outside of the separation cylinder through only a part of the filter ahead of the central part, and they are then sucked into the scroll housing.

As described above, in the centrifugal blower of PTL 2, the air always passes through the central part of the filter irrespective of the operation mode, whereas the air sometimes does not pass through the front and rear parts of the filter depending on the operation mode.

For this reason, the dust collection performance and deodorant performance that the filter is expected to have deteriorate earlier in the central part of the filter relative to the front and rear parts of the filter, which hinders the effective use of the filter.

### Citation List

### Patent Literature

PTL 1: Japanese Patent Application Publication No. 2004-132342
PTL 2: International Publication WO No. 2015/082436 pamphlet

### Summary of Invention

### Technical Problem

The present invention aims to provide a single-suction centrifugal blower for a vehicle, equipped with a separation cylinder, which is capable of making use of a filter effectively by letting the air pass through the entire region of the filter irrespective of its suction mode.

### Solution to Problem

A preferable embodiment of the present invention provides a single-suction centrifugal blower for a vehicle including: a motor; an impeller that has multiple blades which form circumferential blade rows and that is driven to rotate about a rotational axis by the motor to blow air, sucked inside a radially inside space of the blade rows from one end side in an axial direction thereof, out toward radially outside; a scroll housing that has an internal space which houses the impeller therein, a suction port which opens on the one end side in the axial direction, and a discharge port which opens in a circumferential direction thereof; a partition wall that divides a region of the inside space of the scroll housing, located between an inner circumferential face of the scroll housing and an outer circumferential face of the impeller, and an internal space of the discharge port in the axial direction to form a first airflow channel and a second airflow channel; a separation cylinder that passes through a space of the suction port on radially inside thereof and a space of the blade rows of the impeller on the radially inside thereof and extends in the axial direction, that is provided to divide a flow of air sucked into the scroll housing through the suction port into a first airflow to pass through outside of the separation cylinder and a second airflow to pass through inside of the separation cylinder, and that has an outlet side end part which guides the first airflow to the first airflow channel while changing a direction of the first airflow radially outward and guides the second airflow to the second airflow channel while changing a direction of the second airflow radially outward; an air intake housing that has at least one external air introduction port for taking in external air of the vehicle and at least one internal air introduction port for taking in internal air of the vehicle, and that is configured so as to be capable of letting the external air, taken through the external air introduction port, flow toward the outside of the separation cylinder and letting the internal air, taken through the internal air introduction port, flow toward the inside of the separation cylinder; and a filter that is held inside the air intake housing at a position between a set of the internal air introduction port and the external air introduction port and an inlet side end part of the separation cylinder and close to the inlet side end part, in which, when the filter is seen from an upstream side with respect to an airflow direction and when the filter is divided into two regions of a first region and a second region by a virtual division line that traverses a peripheral border of the filter, an opening region surrounded by a peripheral border of the inlet side end part of the separation cylinder coincides with the first region. Advantageous Effects of Invention

According to the embodiment described above, since the opening region surrounded by the peripheral border of the inlet side end part of the separation cylinder is installed to coincide with the first region of the filter divided into the two regions, a region of the separation cylinder located outside the opening region is installed to coincide with the second region of the filter divided into the two regions. The air passing through the opening region of the separation cylinder passes through the first region of the filter irrespective of the suction mode, and the air passing through the region of the separation cylinder located outside the opening region passes through the second region of the filter irrespective of the suction mode. In other words, the above embodiment makes it possible to cause the air, sucked into the centrifugal blower, to always pass through the first region and the second region, and thereby make use of the entire region of the filter effectively irrespective of the suction mode.

### Brief Description of Drawings

Fig. 1 is a vertical sectional view of a centrifugal blower according to a first embodiment of the present invention, including a meridional section thereof.
Fig. 2A is a sectional view taken along the line IIA-IIA of Fig. 1.
Fig. 2B is a sectional view taken along the line IIB-IIB of Fig. 1.
Fig. 2C is a sectional view taken along the line IIC-IIC of Fig. 1.
Fig. 2D is a sectional view taken along the line IID-IID of Fig. 1.
Fig. 3A is an enlarged sectional view illustrating a region of Fig. 1 surrounded by a dashed-dotted line (IIIA-IIIC).
Fig. 3B is another enlarged sectional view illustrating the region of Fig. 1 surrounded by the dashed-dotted line (IIIA-IIIC).
Fig. 3C is another enlarged sectional view illustrating the region of Fig. 1 surrounded by the dashed-dotted line (IIIA-IIIC).
Fig. 4 is a schematic perspective view illustrating the structure of a first switching door.
Fig. 5A is a schematic sectional view illustrating a state where only an external air is taken inside an air intake housing of the centrifugal blower.
Fig. 5B is a schematic sectional view illustrating a state where only an internal air is taken inside the air intake housing of the centrifugal blower.
Fig. 6 is a vertical sectional view of a centrifugal blower according to another embodiment of the present invention, including a meridional section thereof.
Fig. 7 is a vertical sectional view of a centrifugal blower according to still another embodiment of the present invention, including a meridional section thereof.

### Description of Embodiments

Hereinbelow, an embodiment of a centrifugal blower for a vehicle according to the present invention is described with reference to the accompanying drawings.

In each drawing, reference character R denotes the right side of a vehicle, L denotes the left side of the vehicle, Fr denotes the front side of the vehicle, and Rr denotes the rear side of the vehicle, respectively. Note that the direction of arrangement of the centrifugal blower with respect to the vehicle is not limited to that of an illustrated example.

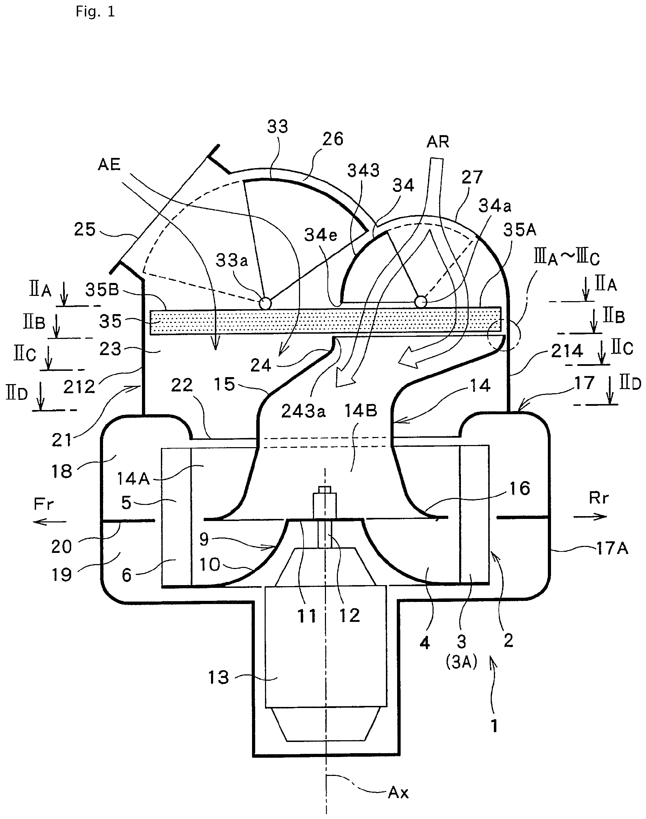

A centrifugal blower 1 illustrated in Fig. 1 is a single-suction centrifugal blower. The centrifugal blower 1 has an impeller 2. The impeller 2 has, in its outer circumferential portion, multiple blades 3 forming blade rows 3A arranged in its circumferential direction. The impeller 2 is driven to rotate about a rotational axis line Ax by a motor 13 to blow the air, sucked inside a radially inside space of the blade rows of the impeller 2 from an upper side in the axial direction thereof (one end side in the axial direction thereof), out toward the radially outside.

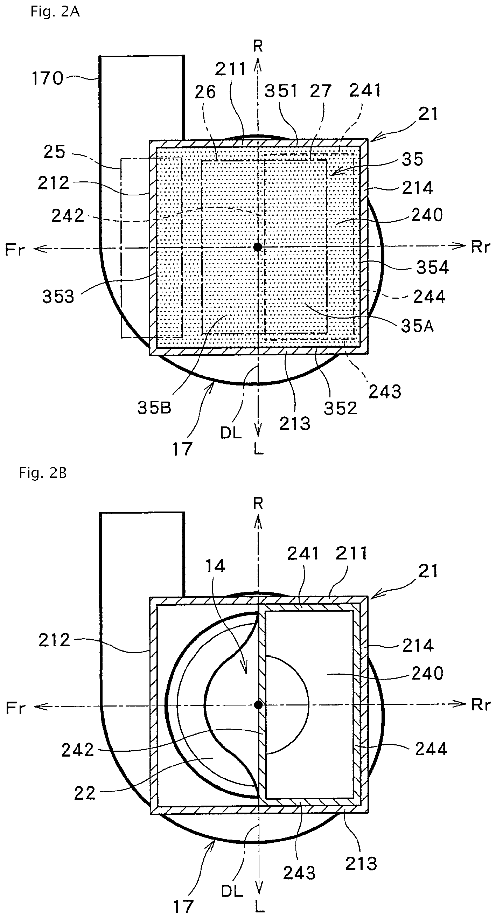

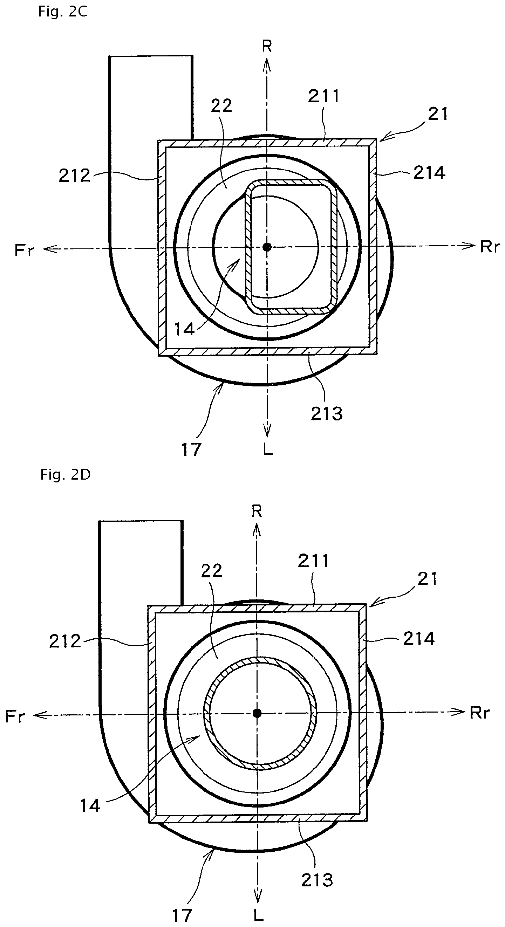

Note that, in this specification, for the sake of convenience of description, the direction of the rotational axis line Ax is referred to as an axial direction or an up-and-down direction, and upper and lower sides in Figs. 1 and 2 are respectively referred to as an "axially upper side" and an "axially lower side". However, the direction of the rotational axis line Ax at the time when an air conditioning system is mounted on a vehicle is not limited to the vertical direction by this. In addition, in this specification, unless otherwise noted, the direction of the radius of a circle which is drawn on a plane, orthogonal to the rotational axis line Ax, about any point on the rotational axis line Ax is referred to as a radial direction, and the circumferential direction of the circle is referred to as a circumferential direction.

The impeller 2 includes an internal deflection member 9 formed integrally with the impeller 2. The internal deflection member 9 is sometimes called a cone part. This internal deflection member 9 is a rotator in a geometrical sense, and has a side circumferential part 10 and a disk-shaped central part 11. In the central part 11, a rotating shaft 12 of the motor 13 is coupled to the impeller 2. In this example, the side circumferential part 10 curves in such a way that the profile line of the outer circumferential face of the side circumferential part 10 in a meridional section thereof inclines sharply toward the central part 11. In another example of the side circumferential part 10 (not illustrated), there is also a case where the profile line of the outer circumferential face of the side circumferential part 10 in the meridional section thereof does not curve from the central part 11 toward the blade rows 3A (has a linear cross section) .

The impeller 2 is housed in a substantially columnar internal space in a scroll housing 17. The scroll housing 17 has a suction port 22 that opens on the axially upper side and a discharge port 170 (see Figs. 2A to 2D). As illustrated in Figs. 2A to 2D, when the scroll housing 17 is seen in the axial direction, the discharge port 170 extends substantially in the direction of tangent to the outer circumferential face of the scroll housing 17. The discharge port 170 cannot be seen in Fig. 1.

The scroll housing 17 has a partition wall 20 that extends radially inward from an outer circumferential wall 17A of the scroll housing 17. The partition wall 20 divides a region of the inside space of the scroll housing 17, located between the inner circumferential face of the scroll housing 17 and the outer circumferential face of the impeller 2, in the axial direction (in the up-and-down direction) to form a first airflow channel 18 on the upper side and a second airflow channel 19 on the lower side that extend in the circumferential direction along the outer circumferential wall 17A of the scroll housing 17.

A separation cylinder 14 is inserted in the scroll housing 17 via the suction port 22. As can be understood from Figs. 2A to 2D, the cross section (which denotes a cross section orthogonal to the rotational axis line Ax) of an upper part 24 (inlet side end part) of the separation cylinder 14 is substantially rectangular. The cross section of a central part 15 of the separation cylinder 14 is circular (or substantially circular). The shape of the cross section of the separation cylinder 14 shifts smoothly from rectangular to circular form as it extends from the upper part 24 closer to the central part 15. In addition, the position of the center of the cross section of the separation cylinder 14 shifts smoothly as it extends from the upper part 24 closer to the central part 15. A lower part 16 (outlet side end part) of the separation cylinder 14 has a flare shape that increases in diameter toward its lower end, and the lower end is circular.

The region ranging from the central part 15 to the lower part 16 of the separation cylinder 16 passes through a space of the suction port 22 on the radially inside thereof and extends axially to a space 4 of the blade rows 3A of the impeller 2 on the radially inside thereof. The upper end of the separation cylinder 14 is located outside the scroll housing 17 (axially upward of the suction port 22). The lower end of the separation cylinder 14 is located in the space 4 of the blade rows 3A of the impeller 2 on the radially inside thereof.

By configuring the centrifugal blower 1 and the separation cylinder 14 as illustrated in Fig. 1 and Figs. 2A to 2D, it is possible to place a filter 35 in a space above the scroll housing 17 and stack the components of the centrifugal blower 1 in the up-and-down direction to arrange them intensively and compactly.

Integrally molding the separation cylinder 14 having the illustrated shape by the resin injection molding technique is impossible, or extremely difficult even if it's possible. Accordingly, it is preferable to manufacture the separation cylinder 14 by coupling two or more pieces, which are respectively made by injection molding, by a method such as bonding or fitting.

The separation cylinder 14 divides the flow of the air, sucked inside the scroll housing 17, into a first airflow to pass through a first passage 14A located outside the separation cylinder 14 and a second airflow to pass through a second passage 14B located inside the separation cylinder 14. The first airflow passes through a ring-shaped region of the suction port 22 of the scroll housing 17 that is located outside the outer circumferential face of the separation cylinder 14, and flows into an upper half part 5 of the blade rows of the impeller 2 (a portion close to the suction port 22). The second airflow enters inside the separation cylinder 14 through the upper end of the separation cylinder 14 and flows into a lower half part 6 of the blade rows of the impeller 2 (a portion far from the suction port 22). Accordingly, the ring-shape region of the suction port 22 of the scroll housing 17 that is located outside the outer circumferential face of the separation cylinder 14 can be deemed as a first suction port of the scroll housing 17, and the opening at the upper end of the separation cylinder 14 can be deemed as a second suction port of the scroll housing 17.

An air intake housing 21 is coupled to the scroll housing 17. The scroll housing 17 and the air intake housing 21 may be molded integrally, or may be manufactured separately and coupled together by a method such as screwing, bonding, or fitting. The scroll housing 17 and the air intake housing 21 constitute a part of an air conditioning system casing.

The air intake housing 21 has a first opening (external air introduction port) 25, a second opening (internal air introduction port) 26, and a third opening (internal air introduction port) 27. The first opening 25 is coupled to, or located near, an outlet (not illustrated) of an external air inlet passage provided in the vehicle, and the external air (the air taken from outside the vehicle) can be introduced into the air intake housing 21 through the first opening 25. The second and third openings 26, 27 are coupled to, or located near, an outlet (not illustrated) of an internal air inlet passage provided in the vehicle, and the internal air (in-vehicle air) can be introduced into the air intake housing 21 through the second opening 26 and/or the third opening 27.

In an illustrative and non-limiting embodiment, as illustrated in Fig. 2A, the first opening 25, the second opening 26, and the third opening 27 may be each a rectangular hole extending in a horizontal direction (L-R direction) of the vehicle. The second opening 26 and the third opening 27 are two openings divided by a partition member (not illustrated) ; however, these openings are not limited to this, and a single continuous opening without a partition member may function as the second opening 26 and the third opening 27.

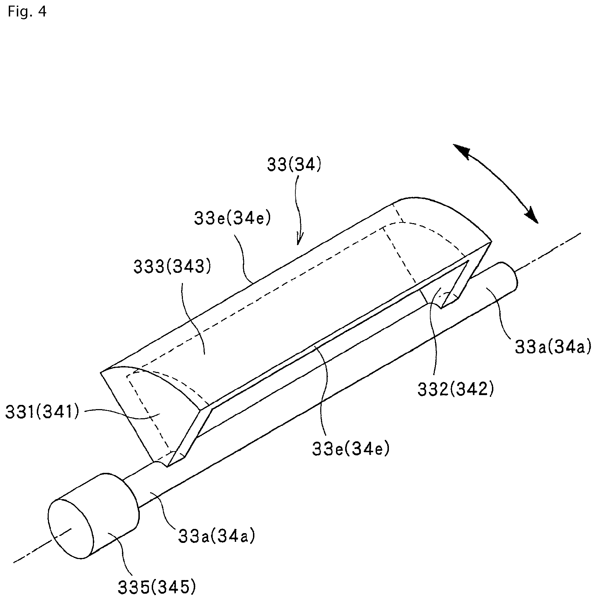

Two switching doors (a first switching door 33 and a second switching door 34) are arranged in the air intake housing 21. As illustrated in Fig. 4, the first switching door 33 has a closure body 333 that is supported on a rotating shaft 33a via a pair of fan-shaped support bodies 331, 332 and has an arc-shaped cross section. A space between an edge 33e extending in the longitudinal direction of the closure body 333 and the rotating shaft 33a constitutes a window (opening), and the air can pass through this window. The first switching door 33 can be turned about the rotational axis line by an actuator 335 such as a rotary motor. The first switching door 33 is sometimes called a rotary door.

The second switching door 34 has the same configuration as the first switching door 33. Reference sign 34a is assigned to the rotating shaft of the second switching door 34, reference signs 341, 342 are assigned to a pair of fan-shaped support bodies of the second switching door 34, reference sign 343 is assigned to a closure body of the second switching door 34, and reference sign 34e is assigned to an edge extending in the longitudinal direction of the closure body 343.

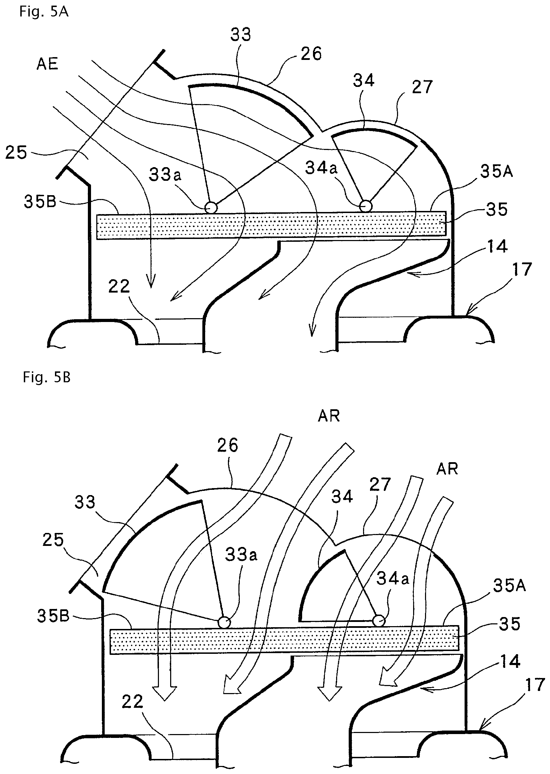

The first switching door 33 can move between: a first position (Fig. 5B) where the first opening 25 is closed and the second opening 26 is opened; and a second position (Fig. 5A) where the first opening 25 is opened and the second opening 26 is closed. The second switching door 34 can move between: a first position (Fig. 5A) where the third opening 27 is closed; and a second position (Fig. 5B) where the third opening 27 is opened.

The filter 35 for removing contaminants, such as dust and particles contained in the air, and abnormal odor is provided in the air intake housing 21 at a position between the first to third openings 25 to 27 and an inlet opening (corresponding to an opening region 240 illustrated in Figs. 2A to 2D) provided in an upper end part of the upper part 24 of the separation cylinder 14. The filter 35 is provided closer to the inlet opening of the separation cylinder 14 than the operation ranges of the first switching door 33 and the second switching door 34. The filter 35 is formed by bending and crimping a nonwoven fabric with predetermined air permeability, for example. A deodorization material such as activated carbon is sometimes installed for deodorization. In addition, the filter 35 is inserted in a slot or rail (not illustrated), provided in the air intake housing 21, and held at a position near the upper part 24, i.e. the inlet side end part, of the separation cylinder 14.

As illustrated in Fig. 2A which is the sectional view taken along the line IIA-IIA of Fig. 1, when the filter 35 (which is dotted in Figs. 2A to 2D) is seen from the upstream side in the airflow direction, the filter 35 is quadrangular (typically rectangular or square). Let the filter 35 be divided into two regions composed of a first region 35A and a second region 35B by a virtual division line DL that traverses the peripheral border of the filter 35. In the illustrated example, the virtual division line DL is a straight line that is orthogonal to the opposite sides of the quadrangle (more specifically the rectangle or the square) constituting the front face of the filter 35, and divides the quadrangle, corresponding to the shape of the front face of the filter 35, into the two quadrangles (more specifically the rectangles) corresponding to the first region 35A and the second region 35B.

In Fig. 2A, the rectangular upper end part (inlet opening) of the separation cylinder 14 which is seen through the filter 35 is drawn by a broken line. The peripheral border in the upper end part is constituted of peripheral border portions 241, 242, 243, and 244 that correspond respectively to the four sides of the rectangle. In the plan view, the opening region 240 in the inlet opening of the separation cylinder 14 surrounded by the peripheral border portions 241, 242, 243, and 244 coincides with the first region 35A of the filter 35. Note that, in Fig. 2A, wall bodies 211, 212, 213, and 214 of the air intake housing 21 are illustrated with hatching.

With the above configuration, almost all the air passing through the first region 35A of the filter 35 flows into the separation cylinder 14, and almost all the air passing through the second region 35B of the filter 35 passes through the outside of the separation cylinder 14 and flows into the suction port 22 of the scroll housing 17.

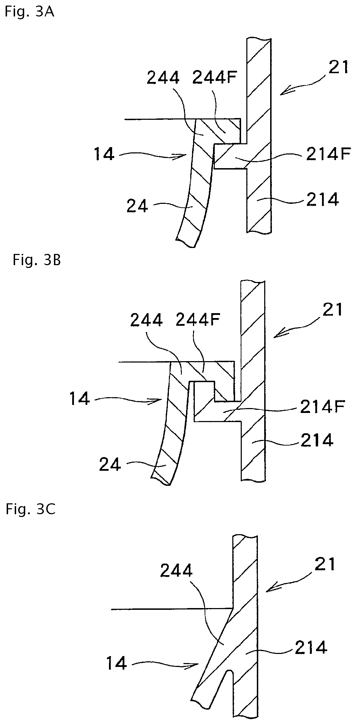

Figs. 3A, 3B, and 3C illustrate the configuration of connection between the wall body 214 of the air intake housing 21 and the peripheral border portion 244 located at the upper end of the separation cylinder 14. The configuration of connection between the wall body 211 and the peripheral border portion 241 and the configuration of connection between the wall body 213 and the peripheral border portion 243 can be deemed the same as that illustrated in Figs. 3A, 3B, and 3C.

In the example of Fig. 3A, a flange 244F that projects outward from the peripheral border portion 244 is placed on a flange 214F that projects from the wall body 214 of the air intake housing 21. In the example of Fig. 3B, the flanges 244F, 214F illustrated in Fig. 3A have complementary convex and concave portions that engage with each other. In the example of Fig. 3C, the wall body 214 of the air intake housing 21 and the upper part of the separation cylinder 14 are integrally molded. By employing such configurations, it is possible to prevent or inhibit the air having flowed into the separation cylinder 14 (such as the internal air introduced into the air intake housing 21 through the third opening) from being leaked into a space outside the separation cylinder 14.

Next, an operation of the air conditioning system for a vehicle illustrated in Figs. 1 to 3 is described.

In a first operation mode of the air conditioning system for a vehicle, as illustrated in Fig. 5A, the first switching door 33 is set at the second position, and the first opening 25 is opened and the second opening 26 is closed. Meanwhile, the second switching door 34 is set at the first position and the third opening 27 is closed. In this case, an external air AE introduced into the air intake housing 21 through the first opening 25 forms: the first airflow to pass through the second region 35B of the filter 35, pass through the first passage 14A located outside the separation cylinder 14, and flow into the upper half part 5 of the blade rows 3A of the impeller 2; and the second airflow to pass through the first region 35A of the filter 35, pass through the second passage 14B located inside the separation cylinder 14, and flow into the lower half part 6 of the blade rows of the impeller 2. The first operation mode is sometimes referred to as an external air mode.

In a second operation mode, as illustrated in Fig. 1, the first switching door 33 is set at the second position, and the first opening 25 is opened and the second opening 26 is closed. Meanwhile, the second switching door 34 is set at the second position and the third opening 27 is opened. In this case, an external air AE introduced into the air intake housing 21 through the first opening 26 forms the first airflow to pass through the second region 35B of the filter 35, pass through the first passage 14A located outside the separation cylinder 14, and flow into the upper half part 5 of the blade rows 3A of the impeller 2. Meanwhile, an internal air AR introduced through the third opening 27 forms the second airflow to pass through the first region 35A of the filter 35, pass through the second passage 14B located inside the separation cylinder 14, and flow into the lower half part 6 of the blade rows 3A of the impeller 2. Note that, as is clear from Fig. 1, the closure body 343 of the second switching door 34 located at the second position divides the space above the filter 35 into a space on the first opening 25 side and a space on the third opening 27 side, and thereby prevents the external air AE and the internal air AR from being mixed above the filter 35. In other words, in the second operation mode, the closure body 343 of the second switching door 34 located at the second position functions as a separation wall that separates the external air AE and the internal air AR above the filter 35. The second operation mode is sometimes referred to as an internal/external air two-layer flow mode.

In a third operation mode, as illustrated in Fig. 5B, the first switching door 33 is set at the first position, and the first opening 25 is closed and the second opening 26 is opened. Meanwhile, the second switching door 34 is set at the second position and the third opening 27 is opened. In this case, an internal air AR introduced into the air intake housing 21 through the second opening 26 and the third opening 27 forms : the first airflow to pass through the second region 35B of the filter 35, pass through the first passage 14A located outside the separation cylinder 14, and flow into the upper half part 5 of the blade rows 3A of the impeller 2; and the second airflow to pass through the first region 35A of the filter 35, pass through the second passage 14B located inside the separation cylinder 14, and flow into the lower half part 6 of the blade rows of the impeller 2. The third operation mode is sometimes referred to as an internal air mode.

The second operation mode (internal/external air two-layer flow mode) is used at the time of performing the heater operation for quickly warming up the vehicle compartment from a state where the vehicle compartment is cold while preventing fog on a windshield especially during winter season or during relatively low temperature period. Alternatively, there is also a case where the third operation mode (internal air mode) is employed at an initial stage of the heater operation and the mode shifts to the second operation mode quickly as soon as the temperature inside the vehicle compartment starts to increase. When this heater operation is performed by automatic control, the external air AE blows on the windshield (not illustrated) through a defroster blowout port (not illustrated) of the vehicle compartment, and the internal air AR blows toward the feet of a passenger through a foot blowout port (not illustrated) of the vehicle compartment.

When the second operation mode (internal/external air two-layer flow mode) is executed, the external air AE having flowed into the upper half part 5 of the blade rows 3A of the impeller 2 is fed to the defroster blowout port via the first airflow channel 18, and the internal air AR having flowed into the lower half part 6 of the blade rows 3A of the impeller 2 is fed to the foot blowout port via the second airflow channel 19. In this event, if the internal air AR which is more humid relative to the external air AE is mixed with the external air AE which is to be fed to the defroster blowout port, this might cause fog on the windshield that is a problematic phenomenon in terms of safety. In addition, if the external air AE which is colder relative to the internal air AR is mixed with the internal air AR which is to be fed to the foot blowout port, this might cause a passenger to feel a sense of discomfort. Accordingly, when the second operation mode is executed, it is preferable that all the external air AE which is less humid relative to the internal air AR flows into the first airflow channel 18 and all the internal air AR which is hotter relative to the external air AE flows into the second airflow channel 19.

To change the subject, as described previously in the Background Art section, in the centrifugal blower stated in PTL 2 above, the first region which is a region where the rectangular inlet opening of the separation cylinder exists is located in the central part of the cross section of the air intake housing including the inlet opening. In this cross section, the two rectangular regions (referred to as the "second region A" and "second region B" for the sake of convenience of description) located respectively on both sides (front and rear sides) of the inlet opening exist, and the air that flows outside the separation cylinder 14 without flowing into the separation cylinder 14 passes through any of the second region A and the second region B and flows into the scroll housing 17.

In this manner, in the centrifugal blower stated in PTL 2, the air never passes through all of the first region, the second region A, and the second region B of the filter 35 at the same time. This limits the area for the air to pass through the filter 35 and increases the airflow resistance of the entire centrifugal blower, so that it might not be able to secure enough amount of air to be sent. In addition, since the air always passes through the first region of the filter 35 in any mode of the three operation modes, particles might accumulate on the first region earlier relative to the second region A and the second region B, and contaminant removal performance and deodorization performance in the first region might decrease. In this way, in the centrifugal blower stated in PTL 2, the dust collection performance and deodorant performance of the first region of the filter 35 deteriorate earlier relative to the other regions and thus the filter cannot be used uniformly, which hinders the entire filter from being used effectively. Further, since a part of the region of the filter 35 is not used, the airflow resistance against the air passing through the filter increases, so that the blower might not be able to exhibit sufficient air sending performance as a centrifugal blower.

On the other hand, in the above embodiment, as described previously, when the filter 35 is divided into the two regions of the first region 35A and the second region 35B (each of which is rectangular in the illustrated example) by the virtual division line DL that traverses the peripheral border of the filter, the opening region 240 in the inlet opening (which is rectangular in the illustrated example) of the separation cylinder 14 coincides with the first region 35A when the filter 35 is seen from the upstream side in the airflow direction. Accordingly, almost all the air having flowed into the separation cylinder 14 passes through the single region, i.e. the first region 35A irrespective of the operation mode, and almost all the air having flowed outside the separation cylinder 14 without flowing into the separation cylinder 14 passes through the single region, i.e. the second region 35B irrespective of the operation mode. Thereby, it is possible to let the air pass through the entire region of the filter 35 irrespective of the operation mode and thus to use the whole filter effectively. In addition, since the air can pass through the entire region of the filter 35 irrespective of the operation mode, an increase in the airflow resistance against the air passing through the filter can be suppressed, which enables the blower to exhibit sufficient air sending performance as a centrifugal blower.

In the above embodiment, the ratio of the area of the first region 35A and the area of the second region 35B is 5:5; however, the ratio is not limited to this and may be 6:4 or 4:6, for example.

In the above embodiment, the virtual division line DL divides the front face of the filter 35 into the two rectangles and this is preferable; however, not limited to this, the virtual division line may divide the front face into two trapezoids. In other words, the angle of the virtual division line DL with the opposite sides of the rectangle (or may be a square) constituting the front face of the filter 35 does not necessarily have to be 90 degrees. The virtual division line DL is preferably a straight line, but may be bent to a certain degree.

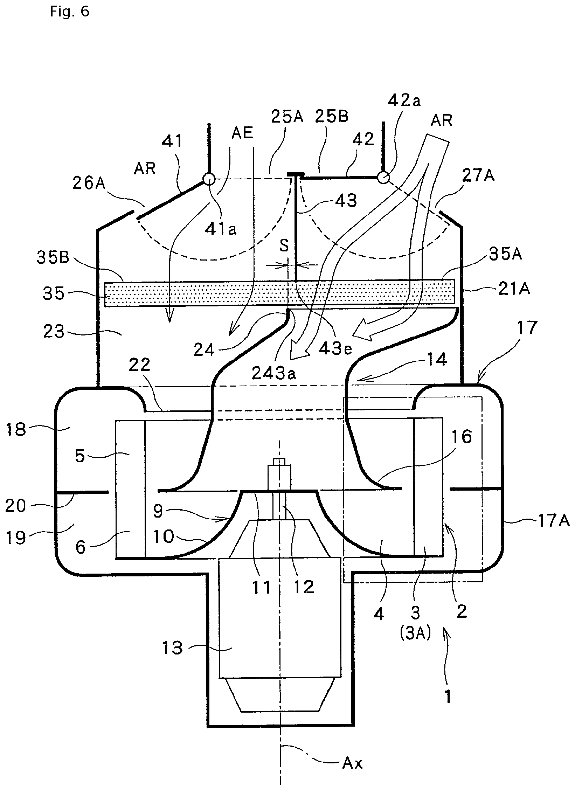

The structure of the air intake housing 21 can be altered as illustrated in Fig. 6. An air intake housing 21A illustrated in Fig. 6 has openings 25A, 25B as an external air introduction port and openings 26A, 27A as an internal air introduction port. The opening 25A and the opening 26A are opened and closed by a first switching door 41 that has a rotating shaft 41a and a closure part extending from the rotating shaft 41a. The opening 25B and the opening 27A are opened and closed by a second switching door 42 that has a rotating shaft 42a and a closure part extending from the rotating shaft 42a. The first switching door 41 and the second switching door 42 are sometimes referred to as a cantilever door. A separation wall 43 is installed in the air intake housing 21A at a position upstream of the filter 35 (upper side in Fig. 6). With this separation wall 43, the air introduced into the air intake housing 21A through the openings 25B and 27A is introduced into the separation cylinder 14, and the air introduced into the air intake housing 21A through the openings 25A and 26A is introduced into the scroll housing 17 while passing through the outside of the separation cylinder 14. Accordingly, when the external air is introduced into the air intake housing 21A through the opening 25A and the internal air is introduced into the air intake housing 21A through the opening 27A, the separation wall 43 separates the external air and the internal air from each other to prevent them from being mixed with each other.

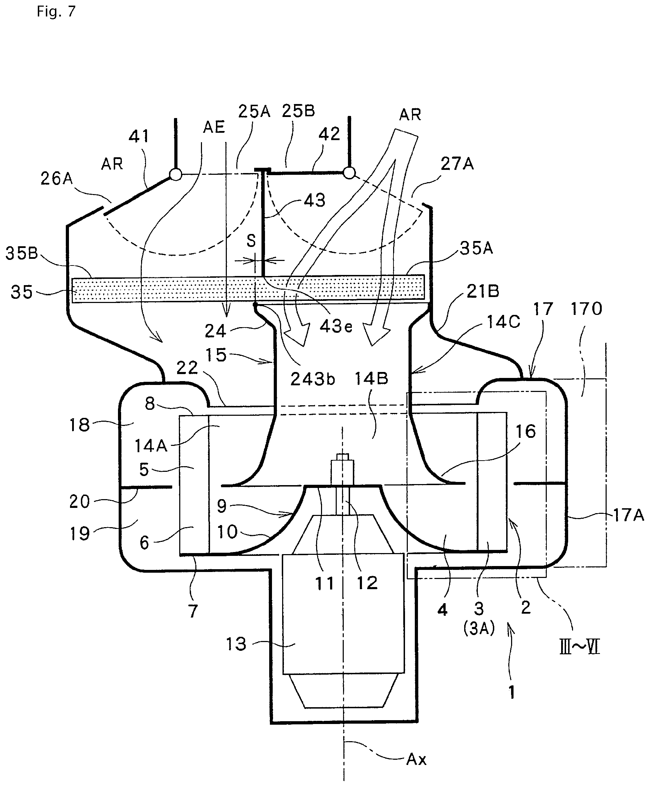

Note that, when the internal/external air two-layer flow mode described above is executed, it is preferable to prevent, as much as possible, the external air AE with low humidity that is to be fed to the defroster blowout port from being mixed with the internal air AR with high humidity. For this reason, in the embodiment illustrated in Fig. 6, when the filter 35 is seen from the upstream side in the airflow direction, the position of a lower end 43e (an end edge located near the filter 35) of the separation wall 43 is displaced toward the first region 35A by a distance S from the position of an upper end 243a of the peripheral border portion 243, located at the upper end of the separation cylinder 14, so that the lower end 43e can be located inside the inlet opening, i.e. the first region 35A located at the upper end of the separation cylinder 14. With regard to this point, the same applies to an embodiment illustrated in Fig. 7 which is to be described later (see the displacement of the lower end 43e of the separation wall 43 relative to an upper end 243b of the peripheral border portion of a separation cylinder 14C by the distance S). The size of the distance S is preferably in a range from 3 mm to 5 mm. If the distance is shorter than 3 mm, abnormal noise might occur when the air passes through the space of the distance S. If the distance is longer than 5 mm, the amount of external air to be mixed with the internal air increases in the internal/external air two-layer flow mode, which makes the two airflows that should be separated harder to separate from each other.

Due to the same reason, also in the embodiment illustrated in Figs. 1 to 5, when the internal/external air two-layer flow mode is executed as illustrated in Fig. 1, it is preferable that the position of the end edge 34e of the closure body 343 of the second switching door 34 located at the second position is likewise displaced toward the first region 35A by the distance S from the position of the upper end 243a of the peripheral border portion 243 located at the upper end of the separation cylinder 14.

In the embodiment illustrated in Fig. 6, the configuration of a portion below the filter 35 is the same as that illustrated in Figs. 1 to 5. Accordingly, as in the embodiment illustrated in Figs. 1 to 5, the embodiment illustrated in Fig. 6 enables the filter 35 to be used uniformly.

The structure of the air intake housing 21 and the configuration of the separation cylinder 14 can be altered as illustrated in Fig. 7. In the separation cylinder 14C illustrated in Fig. 7, the center of its cross section orthogonal to the rotational axis line Ax is not gradually displaced in a direction orthogonal to its axial direction, and the separation cylinder is formed symmetrically with respect to a plane including the rotational axis line Ax and perpendicular to the sheet of Fig. 7. Instead, the center of the cross section orthogonal to the rotational axis line Ax of the air intake housing 21B illustrated in Fig. 7 is gradually displaced in a direction orthogonal to the axial direction. As a result, as in the embodiments of Figs. 1 to 6, an opening region surrounded by the peripheral borders of the inlet opening of the separation cylinder 14C coincides with the first region of the filter 35. Accordingly, as in the embodiments illustrated in Figs. 1 to 6, the embodiment illustrated in Fig. 7 enables the filter 35 to be used uniformly.

By configuring the separation cylinder 14C as illustrated in Fig. 7, it is possible to form the separation cylinder 14C in a symmetrical shape and thereby increase productivity.

Note that, if the position of the lower end 43e (including the filter side end part of the closure body 343 at the time when the second door 34 is located at the second position) of the separation wall 43 is displaced toward the first region 35A by the distance S from the position of the upper end 243a of the peripheral border portion 243 located at the upper end of the separation cylinder 14, the virtual division line DL can be deemed to be located at a position displaced toward the second region 35B by the distance S from the lower end 43e of the separation wall 43. Meanwhile, if the position of the lower end 43e of the separation wall 43 is not displaced from the position of the upper end 243a of the peripheral border portion 243 located at the upper end of the separation cylinder 14, the virtual division line DL can be deemed to be located at the position of the lower end 43e of the separation wall 43. In this way, when the filter 35 is seen from the upstream side with respect to the airflow direction, the virtual division line DL that divides the front face into the two regions of the first region 35A and the second region 35B is a division line that is assumed to be located near the lower end 43e of the separation wall 43.

### Reference Signs List

1: centrifugal blower, 2: impeller, Ax: rotational axis line, 3: blade, 3A: circumferential blade row, 13: motor, 14, 14C: separation cylinder, 16: outlet side end part (lower part), 17: scroll housing, 170: discharge port, 18: first airflow channel, 19: second airflow channel, 20: partition wall, 21, 21A, 21B: air intake housing, 22: suction port, 24: inlet side end part (upper part), 240: opening region, 241, 242, 243, 244: peripheral border (peripheral border portion), 25, 25A, 25B: external air introduction port (opening), 26, 27, 26A, 27A: internal air introduction port (opening), 35: filter, DL: virtual division line, 35A: first region, 35B: second region.

## Claims

1. A single-suction centrifugal blower (1) for a vehicle comprising:
a motor (13);
an impeller (2) that has a plurality of blades (3) which form circumferential blade rows (3A) and that is driven to rotate about a rotational axis line (Ax) by the motor to blow air, sucked inside a radially inside space of the blade rows (3A) from one end side in an axial direction thereof, out toward radially outside;
a scroll housing (17) that has an internal space which houses the impeller therein, a suction port (22) which opens on the one end side in the axial direction, and a discharge port (170) which opens in a circumferential direction thereof;
a partition wall (20) that divides a region of the inside space of the scroll housing (17), located between an inner circumferential face of the scroll housing (17) and an outer circumferential face of the impeller (2), and an internal space of the discharge port (170) in the axial direction to form a first airflow channel (18) and a second airflow channel (19);
a separation cylinder (14; 14C) that passes through a space of the suction port on radially inside thereof and a space of the blade rows of the impeller (2) on the radially inside thereof and extends in the axial direction, that is provided to divide a flow of air sucked into the scroll housing (17) through the suction port (22) into a first airflow to pass through outside of the separation cylinder and a second airflow to pass through inside of the separation cylinder, and that has an outlet side end part (16) which guides the first airflow to the first airflow channel (18) while changing a direction of the first airflow radially outward and guides the second airflow to the second airflow channel (19) while changing a direction of the second airflow radially outward;
an air intake housing (21; 21A; 21B) that has at least one external air introduction port (25; 25A, 25B) for taking in external air of the vehicle and at least one internal air introduction port (26, 27; 26A, 27A) for taking in internal air of the vehicle, and that is configured so as to be capable of letting the external air, taken through the external air introduction port, flow toward the outside of the separation cylinder (14; 14B) and letting the internal air, taken through the internal air introduction port (27), flow toward the inside of the separation cylinder (14); and
a filter (35) that is held inside the air intake housing (21; 21A; 21B) at a position between a set of the internal air introduction port and the external air introduction port and an inlet side end part (24) of the separation cylinder (14; 14C) and close to the inlet side end part (24), wherein
when the filter (35) is seen from an upstream side with respect to an airflow direction and when the filter is divided into two regions of a first region (35A) and a second region (35B) by a virtual division line (DL) that traverses a peripheral border of the filter, an opening region (240) surrounded by a peripheral border (241, 242, 243, 244) of the inlet side end part (24) of the separation cylinder (14; 14B) coincides with the first region (35A).

2. The centrifugal blower according to claim 1, wherein, when the filter (35) is seen from the upstream side with respect to the airflow direction, the filter is quadrangular, the virtual division line (DL) is a straight line and divides the filter into the quadrangular first region (35A) and second region (35B) while traversing opposite sides (351, 352) of the quadrangle which are opposed to each other, and the opening region (240) of the separation cylinder (14; 14C) is a quadrangle having a shape and size corresponding to the quadrangle of the first region.

3. The centrifugal blower according to claim 2, wherein the peripheral border (241, 242, 243, 244) that surrounds the opening region (240) of the quadrangle has a portion (241, 243, 244) corresponding to three sides of the quadrangle, and the portion is in contact with, or formed integrally with, a wall body (214) of the air intake housing (21; 21A; 21B).

4. The centrifugal blower according to any one of claims 1 to 3, wherein, in an intermediate portion of the separation cylinder (14) with respect to the axial direction, a center of a cross section of the separation cylinder (14) orthogonal to the rotational axis line (Ax) is gradually displaced in a direction orthogonal to the axial direction so that the opening region (240) of the separation cylinder (14) coincides with the first region (35A).

5. The centrifugal blower according to any one of claims 1 to 3, wherein, in a region between the filter (35) and the scroll housing (17), a center of a cross section of the air intake housing (21B) orthogonal to the rotational axis line (Ax) is gradually displaced in a direction orthogonal to the axial direction so that the opening region (240) of the separation cylinder (14C) coincides with the first region (35A) .

6. The centrifugal blower according to any one of claims 1 to 5, wherein the internal air introduction port (26, 27) is located on the first region (35A) side of the filter, and the external air introduction port (25) is located on the second region (35B) side of the filter.

7. The centrifugal blower according to claim 1, wherein, when external air is taken inside the air intake housing (21A, 21B) through the external air introduction port (25A) and external air is taken inside the air intake housing (21B) through the internal air introduction port (27A), a partition wall (43) that separates the external air and the internal air from each other is provided in a region of the air intake housing (21B) at a position upstream of the filter (35) and, when the filter (35) is seen from the upstream side with respect to the airflow direction, an end edge (43e) of the separation wall (43) located near the filter (35) is located inside the first region (35A).
